# EUROPEAN PATENT APPLICATION

(11) **EP 4 804 514 A1**
(43) Date of publication of application: **09.09.2026**
(21) Application number: 24884871.5
(22) Date of filing: 31.10.2024
(51) Int. Cl.: H04N 5/265

(54) **SPECIAL EFFECT TEMPLATE GENERATION METHOD AND APPARATUS, ELECTRONIC DEVICE, AND STORAGE MEDIUM**

(30) Priority: 01.11.2023 CN 202311444526
(71) Applicant: Beijing Zitiao Network Technology Co., Ltd., Beijing 100190 (CN); Lemon Inc., Grand Cayman, KY1-1205 (KY)
(72) Inventor: SU, Xinming, Beijing 100028 (CN); SHERGILL, Jagminder, Los Angeles, California 90066 (US); TANG, Wenjing, Beijing 100028 (CN); MENG, Jie, Los Angeles, California 90066 (US); QIN, Yuwen, Beijing 100028 (CN)
(74) Representative: Marks & Clerk LLP
(86) International application number: PCT/CN2024/128730
(87) International publication number: WO 2025/092871

(57) **Abstract**

Embodiments of the present disclosure provide a special effect template generation method and apparatus, an electronic device, and a storage medium. The method comprises: receiving demand information input by a user, wherein the demand information is used for describing a target generation requirement of a special effect template on the basis of a natural language; on the basis of the demand information, generating special effect description information, wherein the special effect description information is used for indicating template features of a target special effect template meeting the target generation requirement; and processing the special effect description information by means of a special effect tool, and generating the target special effect template. The target generation requirement input by the user and described on the basis of a natural language is converted into the special effect description information, and then the special effect description information is processed by using the special effect tool, so as to generate the target special effect template meeting the target generation requirement, thereby achieving rapid generation of personalized target special effect templates, simplifying the steps of generating special effect templates, and improving the generation efficiency of special effect templates and the diversity of the special effect templates.

## Description

The present application claims priority to Chinese Patent Application No. 202311444526.4, filed on November 1, 2023, which is incorporated herein by reference in its entirety as a part of the present application.

### TECHNICAL FIELD

Embodiments of the present disclosure relate to an effect template generation method and apparatus, an electronic device, and a storage medium.

### BACKGROUND

At present, for an application scenario of video creation, video editing software and platforms provide users with different effect templates, and by loading an effect template to a video, a purpose of improving the visual expression of the video is achieved.

However, the effect templates mentioned above are pre-installed in a platform or an application after being manually edited, and have problems such as fixed styles and limited types, which affect the application effects of the effect templates in the video.

### SUMMARY

Embodiments of the present disclosure provide an effect template generation method and apparatus, an electronic device, and a storage medium, to overcome the problems of fixed styles and limited types of video templates.

According to a first aspect, an embodiment of the present disclosure provides an effect template generation method. The method includes:
receiving requirement information input by a user, where the requirement information is configured to describe a target generation requirement for an effect template in a natural language; generating effect description information based on the requirement information, where the effect description information is configured to represent a template feature of a target effect template that meets the target generation requirement; and processing, by using an effect tool, the effect description information to generate the target effect template.

According to a second aspect, an embodiment of the present disclosure provides an effect template generation apparatus. The apparatus includes:
a receiving module configured to receive requirement information input by a user, where the requirement information is configured to describe a target generation requirement for an effect template in a natural language;

a processing module configured to generate effect description information based on the requirement information, where the effect description information is configured to represent a template feature of a target effect template that meets the target generation requirement; and
a generation module configured to process, by using an effect tool, the effect description information to generate the target effect template.

According to a third aspect, an embodiment of the present disclosure provides an electronic device. The electronic device includes: a processor and a memory.

The memory has computer-executable instructions stored thereon.

The processor executes the computer-executable instructions stored in the memory, to cause the processor to perform the effect template generation method according to the first aspect and various possible designs of the first aspect.

According to a fourth aspect, an embodiment of the present disclosure provides a computer-readable storage medium storing computer-executable instructions that, when executed by a processor, cause the effect template generation method according to the first aspect and various possible designs of the first aspect to be implemented.

According to a fifth aspect, an embodiment of the present disclosure provides a computer program product including a computer program that, when executed by a processor, causes the effect template generation method according to the first aspect and various possible designs of the first aspect to be implemented.

### BRIEF DESCRIPTION OF DRAWINGS

In order to describe the technical solutions in embodiments of the present disclosure more clearly, the drawings required for describing the embodiments are briefly described below. Apparently, the drawings in the following description are some embodiments of the present disclosure, and those of ordinary skill in the art may still derive other drawings from these drawings without creative efforts.
FIG. 1 is a diagram of an application scenario of an effect template generation method according to an embodiment of the present disclosure;
FIG. 2 is a first schematic flowchart of an effect template generation method according to an embodiment of the present disclosure;
FIG. 3 is a schematic diagram of an interaction in which a user inputs requirement information according to an embodiment of the present disclosure;
FIG. 4 is a flowchart of a specific implementation of S102 in the embodiment shown in FIG. 2;
FIG. 5 is a flowchart of a specific implementation of S103 in the embodiment shown in FIG. 2;
FIG. 6 is a flowchart of generating a target effect template according to an embodiment of the present disclosure;
FIG. 7 is a second schematic flowchart of an effect template generation method according to an embodiment of the present disclosure;
FIG. 8 is a flowchart of a specific implementation of S203 in the embodiment shown in FIG. 7;
FIG. 9 is a flowchart of another specific implementation of S203 in the embodiment shown in FIG. 7;
FIG. 10 is a structural block diagram of an effect template generation apparatus according to an embodiment of the present disclosure;
FIG. 11 is a schematic structural diagram of an electronic device according to an embodiment of the present disclosure; and
FIG. 12 is a schematic diagram of a hardware structure of an electronic device according to an embodiment of the present disclosure.

### DETAILED DESCRIPTION

In order to make the objectives, technical solutions, and advantages of embodiments of the present disclosure clearer, the technical solutions in the embodiments of the present disclosure are described clearly and completely below with reference to the drawings in the embodiments of the present disclosure. Apparently, the embodiments described are some rather than all of the embodiments of the present disclosure. All other embodiments obtained by those of ordinary skill in the art based on the embodiments of the present disclosure without any creative effort shall fall within the scope of protection of the present disclosure.

It should be noted that user information (including but not limited to device information, personal information, and the like of a user) and data (including but not limited to data for analysis, stored data, displayed data, and the like) involved in the present disclosure are information and data for which an authorization is obtained from the user or a full authorization is obtained from each party, and the collection, use, and processing of relevant data need to comply with relevant laws, regulations, and standards of relevant countries and regions, for which corresponding operation entries are provided for the user to choose to authorize or deny.

An application scenario of the embodiments of the present disclosure is explained below.

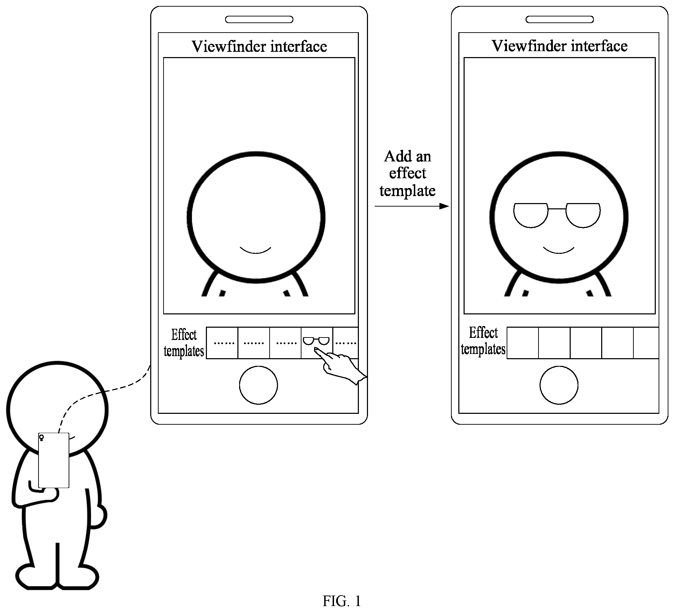

FIG. 1 is a diagram of an application scenario of an effect template generation method according to an embodiment of the present disclosure. The effect template generation method according to this embodiment of the present disclosure may be applied to an application having an effect generation function, and more specifically, to an application scenario for making an effect template and adding a video effect to a video. An execution entity of this embodiment may be a terminal device that runs the application having an effect generation function, may be a server at a corresponding serving end at which the application is deployed, or may be other electronic devices that have a similar function. Referring to FIG. 1, a terminal device is taken as an example, where the terminal device is, for example, a smartphone. The terminal device photographs a user through a camera unit and displays a selfie video (a preview video) of the user in a viewfinder interface. Thereafter, in response to a user operation, a target effect template is loaded to display a corresponding effect, such as virtual "glasses" shown in the figure, in the selfie video, thereby implementing the application scenario for adding the video effect to the video.

The above-mentioned implementation process of adding an effect to the video is generally implemented by using effect templates provided within the platform or application. The user may select one or more of the preset effect templates provided within the platform or application and apply the selected effect templates to the video, thereby adding the effect to the video. However, the effect templates have fixed styles and limited types since they are pre-generated, and as a result, the user often cannot obtain a target effect that matches the video content or that the user is interested in, thus affecting the application effects of the effect templates in the video.

An embodiment of the present disclosure provides an effect template generation method to solve the above-mentioned problems.

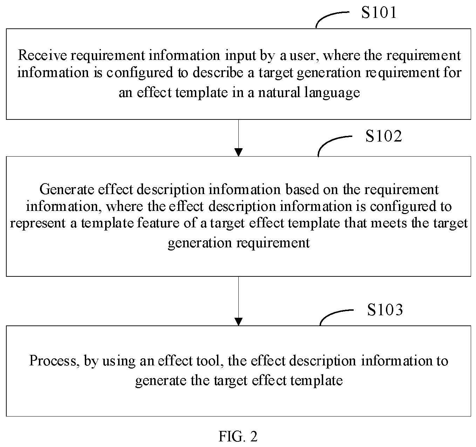

Referring to FIG. 2, FIG. 2 is a first schematic flowchart of an effect template generation method according to an embodiment of the present disclosure. The method of this embodiment may be applied to a terminal device. The effect template generation method includes the following steps.

S101: Receive requirement information input by a user, where the requirement information is configured to describe a target generation requirement for an effect template in a natural language.

For example, reference is made to the schematic diagram of the application scenario shown in FIG. 1. In this embodiment, before selecting a target effect template, the terminal device may generate a required personalized effect template in real time based on the requirement information input by the user. Specifically, in a possible implementation, the terminal device displays, in the first interface, an input control for inputting information, for example, an editable text box or a voice input button, and the user inputs characters or voice to the terminal device through the input control, so that the terminal device can obtain the requirement information. The requirement information is configured to describe the generation requirement for the target effect in the natural language. For example, the requirement information may be a segment of text, and the corresponding text content thereof is "Create a science fiction-style background effect template for me".

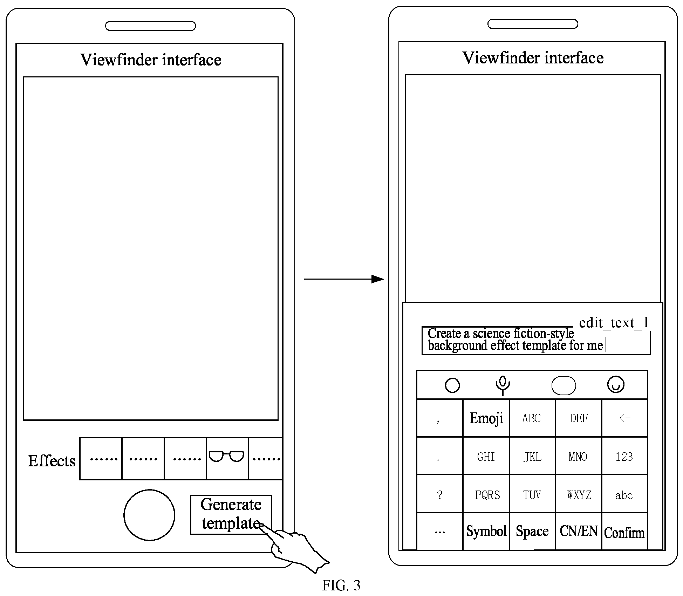

FIG. 3 is a schematic diagram of an interaction in which a user inputs requirement information according to an embodiment of the present disclosure. The above-mentioned S101 is described below with reference to FIG. 3. As shown in FIG. 3, after the terminal device starts a target application, a viewfinder interface for shooting a video is invoked, and a "Generate template" control for adding an effect is provided in the viewfinder interface. In response to a click operation of the user on the "Generate template" control, the first interface is displayed in the viewfinder interface, where the first interface includes an editable text box edit_text_1 (shown as edit_text_1 in the figure). Then, the user inputs a text into the editable text box, for example, "Create a science fiction-style background effect template for me". The terminal device performs semantic analysis on the above-mentioned input text to generate requirement information; or the input text obtained through identification is directly used as requirement information for the execution of subsequent steps.

S102: Generate effect description information based on the requirement information, where the effect description information is configured to represent a template feature of a target effect template that meets the target generation requirement.

For example, after the requirement information input by the user is obtained, the requirement information is further processed to generate information that can be identified and used by an effect tool, i.e., effect description information, so that in subsequent steps, a target effect template that matches the requirement information is generated by using the effect tool. Specifically, the effect description information is configured to represent the template feature of the target effect template that meets the target generation requirement. In a possible implementation, the effect description information is a table having one or more description fields, where each of the description fields corresponds to one feature dimension of the template feature of the target effect template. The template feature of the target effect template is described by features in corresponding feature dimensions represented respectively by field values of a plurality of description fields. In addition, after being processed, the requirement information may further represent one or more qualifying dimensions corresponding to the target generation requirement, and may be mapped to corresponding feature dimensions through the qualifying dimensions, thereby converting the requirement information into the effect description information.

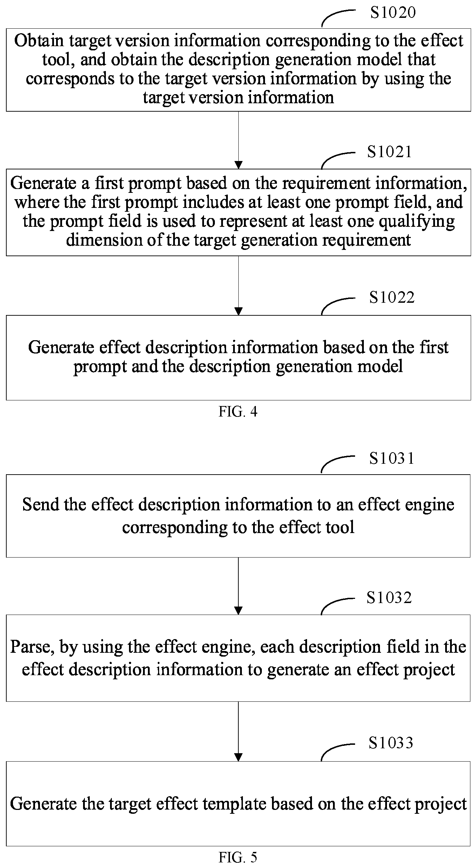

In a possible implementation, as shown in FIG. 4, a specific implementation of S102 includes the following steps.

S1021: Generate a first prompt based on the requirement information, where the first prompt includes at least one prompt field, and the prompt field is configured to represent at least one qualifying dimension of the target generation requirement.

S1022: Generate the effect description information based on the first prompt and a description generation model.

For example, first, the terminal device generates, based on the requirement information (e.g., a descriptive text), a first prompt corresponding to the requirement information, where the prompt is an input parameter for guiding a model to output content, and has a format and a description manner that match the model using the prompt. The first prompt in this embodiment may be a text generated by processing the requirement information based on a prompt model. The first prompt may represent semantic content of the requirement information. For example, the first prompt may be a text in a feature text format that summarizes and generalizes the content of the requirement information. The first prompt may be one or more keywords in the requirement information. The specific implementation of the first prompt is not described in detail here, and the first prompt may be subsequently set based on specific implementation of a description generation model using the first prompt.

Further, based on the generated first prompt and the description generation model, content generation (AIGC) is performed, so that effect description information for representing a template feature of a target effect template that meets the target generation requirement can be obtained. The description generation model corresponds to an effect tool, and thus can generate effect description information that matches an effect tool to be used subsequently. For example, when the effect tool is a tool tool_A, a description generation model model_1 is invoked, and then the first prompt is input into the model model_1, so as to guide the model model_1 to output effect description information M1 that can be received and processed by the tool tool_A; when the effect tool is a tool tool_B, a description generation model model_2 is invoked, and then the first prompt is input to the model model_2, so as to guide the model model_2 to output effect description information M2 that can be received and processed by the tool tool_B.

Further, in a possible implementation, before S1022, the method further includes the following step.

S1020: Obtain target version information corresponding to the effect tool, and obtain the description generation model that corresponds to the target version information by using the target version information.

The target version information is configured to represent a tool name and/or a tool version of the effect tool, and the description generation model is configured to generate target effect description information applicable to the target version information.

For example, before the effect description information is generated using the description generation model, in order to make the effect description information generated by the description generation model compatible with an effect tool that subsequently uses the effect description information, the description generation model is first selected or dynamically generated. Specifically, the target version information corresponding to the effect tool may be obtained to map a corresponding description generation model, where the target version information is configured to represent a tool name and/or a tool version of the effect tool. For example, the target version information is Info_1={Tag_1, version_1}. Tag_1 denotes a tool name; and version_1 denotes a version number of the effect tool Tag_1. A target effect tool of a target version can be accurately determined by using the target version information, and then a matching description generation model can be invoked in a targeted manner to generate effect description information. More specifically, for example, a plurality of candidate description generation models are pre-stored locally in the terminal device or in a server. The terminal device determines, based on the target version information, a target description generation model that matches the target version information from the plurality of candidate description generation models, and then processes the first prompt by using the target description generation model, to obtain the target effect description information.

S103: Process, by using an effect tool, the effect description information to generate the target effect template.

For example, after the effect description information is obtained, the effect description information is loaded by using an effect tool deployed locally in the terminal device or in a cloud server, and based on the template feature of the target effect template represented by the effect description information, a target effect template that meets the target generation requirement is generated correspondingly. Further, the effect description information includes at least a template layout and a corresponding effect asset, where the template layout represents a position arrangement of an effect element in a target effect generated by using the target effect template, and the effect asset is an asset for implementing the effect element. Further, the effect tool can generate a target effect template by packaging and compiling the above-mentioned template layout and effect asset.

In a possible implementation, the effect description information includes a plurality of description fields. As shown in FIG. 5, a specific implementation of S103 includes the following steps.

S1031: Send the effect description information to an effect engine corresponding to the effect tool.

S1032: Parse, by using the effect engine, each description field in the effect description information to generate an effect project.

S1033: Generate the target effect template based on the effect project.

For example, after the effect description information is obtained, the effect description information is input into the effect engine corresponding to the effect tool, where the effect engine is one of the functional units in the effect tool that are used for generating an effect template. The effect engine may be deployed locally in the terminal device, i.e., inside the effect tool, or the effect engine may be deployed in a cloud server, and in this case, the effect tool uses the effect engine through remote invocation. Further, after the effect description information is sent to the effect engine, the effect engine parses each description field in the effect description information, and performs packaging to generate an effect project, based on a feature dimension of a template feature of the target effect template described by each description field, such as an arrangement feature of an effect element of the effect template, an interaction logic feature of the effect template, and an associated display feature. For example, the effect project is a data package that contains all or main information or data required for the operation of the effect template. Thereafter, the target effect template can be generated by publishing the effect project to the platform or loading the effect project to the application. The specific implementation process of generating the target effect template based on the effect project depends on the loading manner of the target effect template in a specific application scenario, and will not be described with examples here.

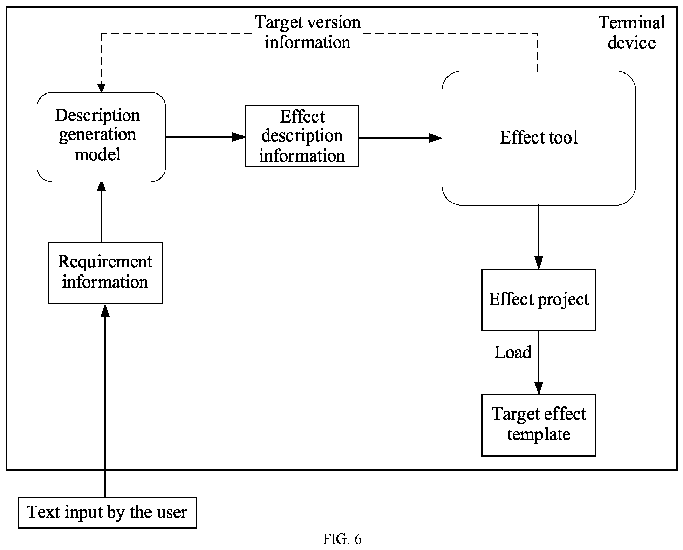

FIG. 6 is a flowchart of generating a target effect template according to an embodiment of the present disclosure, and the above-mentioned embodiment is described in more detail below with reference to FIG. 6. Referring to FIG. 6, first, the terminal device receives a text input by the user through an interaction interface to obtain requirement information. Thereafter, a description generation model is generated by using target version information of the effect tool. Afterwards, the requirement information is input into the description generation model to obtain effect description information, the effect description information is input into the effect engine corresponding to the effect tool, and the effect engine generates a corresponding effect project based on a plurality of description fields in the effect description information. Finally, the effect project is loaded and a corresponding target effect template is displayed on one side of the terminal device, thereby generating the target effect template.

In this embodiment, the requirement information input by the user is received, where the requirement information is configured to describe the target generation requirement for the effect template in the natural language; the effect description information is generated based on the requirement information, where the effect description information is configured to represent the template feature of the target effect template that meets the target generation requirement; and the effect description information is processed by using the effect tool to generate the target effect template. The target generation requirement input by the user and described in the natural language is converted into the effect description information, and then the effect description information is processed using the effect tool to generate the target effect template that meets the target generation requirement, thereby rapidly generating a personalized target effect template, simplifying the generation steps of the effect template, and improving the generation efficiency and the diversity degree of the effect template.

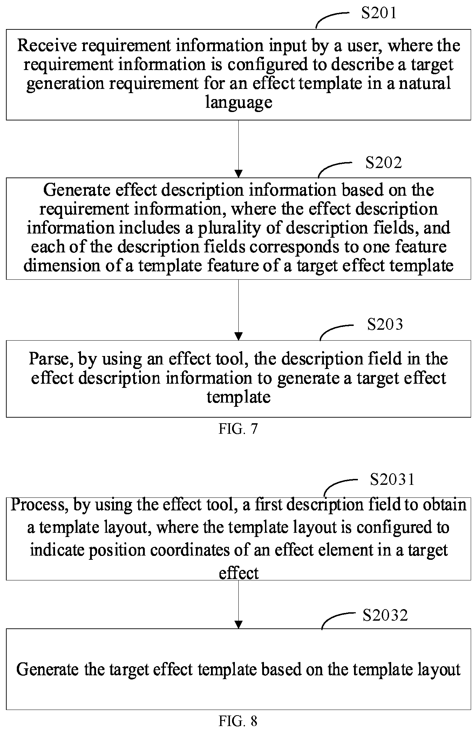

Referring to FIG. 7, FIG. 7 is a second schematic flowchart of an effect template generation method according to an embodiment of the present disclosure. In this embodiment, S103 is further detailed based on the embodiment shown in FIG. 2. The effect template generation method includes the following steps.

S201: Receive requirement information input by a user, where the requirement information is configured to describe a target generation requirement for an effect template in a natural language.

S202: Generate effect description information based on the requirement information, where the effect description information includes a plurality of description fields, and each of the description fields corresponds to one feature dimension of a template feature of a target effect template.

S203: Parse, by using an effect tool, the description field in the effect description information to generate a target effect template.

For example, after the effect description information is obtained, the effect description information is input into the effect tool, and the effect tool is utilized to construct a target effect template separately based on the template features described in the description fields in the effect description information. This process is described in detail below with reference to a specific implementation of the description field in the effect description information.

In a possible implementation, the effect description information includes a first description field. As shown in FIG. 8, a possible implementation of S203 includes the following steps.

S2031: Process, by using the effect tool, the first description field to obtain a template layout, where the template layout is configured to indicate position coordinates of an effect element in a target effect.

S2032: Generate the target effect template based on the template layout.

For example, the first description field is information for describing an arrangement or a position of the effect element, and the field content of the first description field may be a position matrix that represents a position of the effect element, or may be an identifier that represents an arrangement type of the effect element. For example, in a case that a field value of the first description field is an identifier #1, it means that the effect element is arranged in a circular array around a center point, or in a case that a field value of the first description field is an identifier #2, it means that the effect element is arranged in the center of the image. Thereafter, based on the information described by the first description field, a corresponding template layout is generated, or a template layout matching the information best is selected. The template layout may be layout data that represents position coordinates in the target effect, and the effect tool may implement the positioning of the effect element based on the template layout.

Further, in a possible implementation, S2032 includes the following specific implementation steps.

S2032A: Obtain an effect asset based on the requirement information.

S2032B: Load the effect asset at the position coordinates of the effect element based on the template layout to generate the target effect template.

For example, first, based on content of the requirement information input by the user, a corresponding effect asset, such as an effect map, can be obtained, so that content of the generated target effect template matches the requirement information. For example, when the content of the requirement information is "Create a science fiction-style background effect template for me", accordingly, the terminal device downloads a "science fiction style" effect asset from a server or generates a "science fiction style" effect asset by an AIGC model. Thereafter, based on the template layout, the effect asset is loaded at placeholder coordinates corresponding to the effect element, thereby generating a target effect template. After the target effect template is triggered, the effect asset can be displayed at the position coordinates of the effect element in the target effect generated by using the target effect template. The effect element layout in the effect template can be set by using the implementation method provided in the steps of this embodiment, so that the generated target effect template can meet the target generation requirement corresponding to the requirement information in dimensions of effect element arrangement and effect asset.

In a possible implementation, the effect description information includes a second description field, where the second description field is configured to represent an interaction logic feature in a target effect generated by using the target effect template. Another possible implementation of S203 includes the following steps.

S2033: Process, by using the effect tool, the second description field to obtain a target interaction component corresponding to the interaction logic feature.

S2034: Generate the target effect template based on the target interaction component.

For example, the interaction logic feature in the target effect is an interaction logic between an effect element in the target effect and a video object in a target video using an effect template, when the target effect generated by using the effect template has an interaction function. For example, a visual effect of the target effect is: "A flame that moves with a hand of a person in the video". In the target effect, "flame" is the effect element, "a hand of a person" is the video object, and "the flame moves with the hand" is the interaction logic feature. The above-mentioned interaction logic feature is represented or described by the second description field. Thereafter, the second description field is processed using the effect tool to obtain an interaction component that matches the second description field, that is, a target interaction component, and then the target interaction component is packaged to generate an effect project, thereby generating the target effect template.

The effect interaction logic in the effect template can be set by using the implementation method provided in the steps of this embodiment, so that the generated target effect template can meet the target generation requirement corresponding to the requirement information in the dimension of interaction logic.

In a possible implementation, the effect description information includes a third description field, where the third description field is configured to represent an associated display feature between a target effect generated by using the target effect template and a target video, and the target video is an application object of the target effect template. For example, still another possible implementation of S203 includes the following steps.

S2035: Process, by using the effect tool, the third description field to obtain a first effect algorithm for implementing the associated display feature.

S2036: Generate the target effect template based on the first effect algorithm.

For example, the associated display feature between the target effect and the target video is a display feature having an association between the effect element in the target effect and the video object in the target video. More specifically, for example, the associated display feature includes, for example, a layer feature, that is, the layer where the target video or the video object in the target video is located, as well as the layer where the target effect or the effect element in the target effect is located can be determined by using the associated display feature, thereby implementing different video effects such as a "background effect" (where the video object is in a layer above the effect element) and a "face-swapping effect" (where the video object is in a layer under the effect element). The associated display feature represented by the third description field is processed using the effect tool to obtain a first effect algorithm, for example, a segmentation algorithm, that matches the associated display feature, so as to implement segmentation of the video object or the effect element during the process of loading the effect. Thereafter, the first effect algorithm is packaged to generate an effect project, thereby generating the target effect template.

The associated display feature in the effect template can be set by using the implementation method provided in the steps of this embodiment, so that the generated target effect template can meet the target generation requirement corresponding to the requirement information in the dimensions of layer display and occlusion relationship between the video object and the effect element.

In a possible implementation, the effect description information includes a fourth description field, where the fourth description field is configured to represent mapping logic between an effect element in a target effect generated by using the target effect template and a video image of a target video, and the target video is an application object of the target effect template. Yet another possible implementation of S203 includes the following steps.

S2037: Process, by using the effect tool, the fourth description field to obtain a second effect algorithm for representing the mapping logic.

S2038: Generate the target effect template based on the second effect algorithm.

For example, the mapping logic between the effect element in the target effect and the video image of the target video means that the effect element in the target effect can be changed dynamically, and the change of the effect element is associated with the video image of the target video. For example, a visual effect of the target effect is: "A flame that moves with a hand of a person in the video, where the flame is red when the hand of the person in the target video is open; and the flame is blue when the hand of the person in the target video is clenched". In the above-mentioned target effect, when the hand motion of the person in the target video changes, the effect asset or a display attribute of the effect asset also changes accordingly. The mapping logic is mapping logic between the effect element in the target effect and the video image of the target video. The mapping logic is described by the fourth description field. After the fourth description field is processed by using the effect tool, an algorithm for implementing the mapping logic, i.e. the second effect algorithm, is generated or loaded.

Further, in a possible implementation, the second effect algorithm includes a trigger parameter and a mapping parameter corresponding to the trigger parameter, where the trigger parameter is configured to represent an image feature of a video image of the target video; and the mapping parameter is configured to set an effect asset for implementing the effect element, and/or to set a display attribute of the effect asset. Specifically, the second effect algorithm implements at least one set of mapping logic, where each set of mapping logic includes a trigger parameter and a corresponding mapping parameter. For example, the mapping logic is expressed as {para_1, para_2}, where para_1 is a mapping parameter and para_2 is a trigger parameter. The trigger parameter represents a trigger condition that is based on an image feature, for example, "the hand of the person is open", or "the hand of the person is clenched" in the above-mentioned example; while the mapping parameter corresponding thereto represents an effect asset or a display attribute.

The mapping logic between the effect element in the target effect implemented by using the target effect template and the video image of the target video can be set by using the implementation method provided in the steps of this embodiment, so that the generated target effect template can meet the target generation requirement corresponding to the requirement information in the dimension of dynamic mapping function between the effect element and the video image.

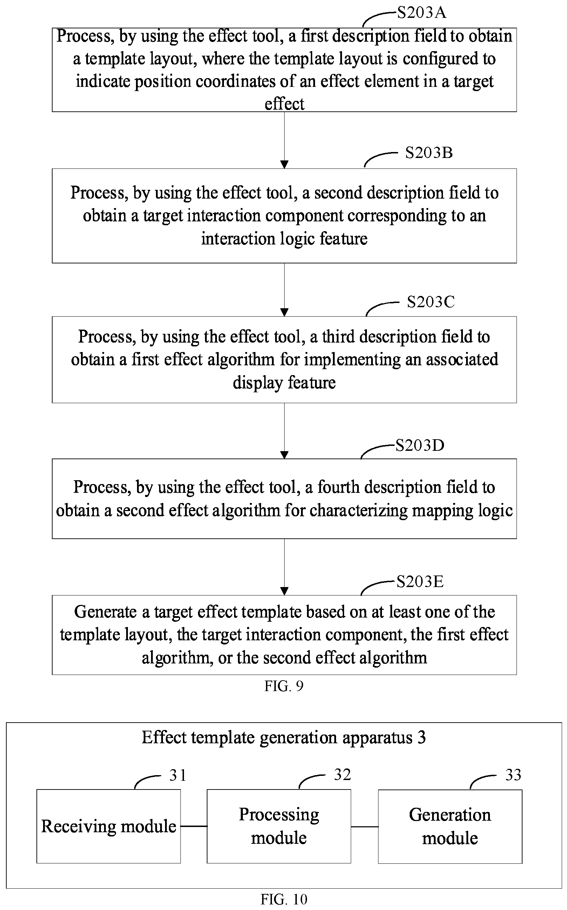

It should be noted that, the several possible implementations of S203 described above can be carried out separately to implement S203, or two or more of the steps can be carried out simultaneously to implement S203. For example, as shown in FIG. 9, the specific implementation of S203 includes the following steps.

S203A: Process, by using the effect tool, a first description field to obtain a template layout, where the template layout is configured to indicate position coordinates of an effect element in a target effect.

S203B: Process, by using the effect tool, a second description field to obtain a target interaction component corresponding to an interaction logic feature.

S203C: Process, by using the effect tool, a third description field to obtain a first effect algorithm for implementing an associated display feature.

S203D: Process, by using the effect tool, a fourth description field to obtain a second effect algorithm for representing mapping logic.

S203E: Generate a target effect template based on at least one of the template layout, the target interaction component, the first effect algorithm, or the second effect algorithm.

For example, the specific implementation processes of the above-mentioned S203A to S203D have been described in detail in the previous embodiments and will not be repeated here. Thereafter, the above-mentioned plurality of description fields in the effect description information are separately parsed by using an effect engine of the effect tool, and corresponding information, assets, components, and algorithms are obtained and combined to obtain an effect project, and then a target effect template is generated on one side of the terminal device based on the effect project. In this way, a plurality of feature dimensions of the target effect template are controlled, thereby allowing the generated target effect template to meet in all aspects the target generation requirement indicated by the requirement information, and improving the content richness and the personalization degree of the generated target effect.

In this embodiment, implementations of S201 and S202 are the same as implementations of S101 and S102 in the embodiment shown in FIG. 2 in the present disclosure, and details are not described herein again.

Corresponding to the effect template generation method in the above-described embodiments, FIG. 10 is a structural block diagram of an effect template generation apparatus according to an embodiment of the present disclosure. For ease of illustration, only parts related to this embodiment of the present disclosure are shown. Referring to FIG. 10, an effect template generation apparatus 3 includes:

a receiving module 31 configured to receive requirement information input by a user, where the requirement information is configured to describe a target generation requirement for an effect template in a natural language;

a processing module 32 configured to generate effect description information based on the requirement information, where the effect description information is configured to represent a template feature of a target effect template that meets the target generation requirement; and a generation module 33 configured to process, by using an effect tool, the effect description information to generate the target effect template.

In an embodiment of the present disclosure, the processing module 32 is specifically configured to: generate a first prompt based on the requirement information, where the first prompt includes at least one prompt field, and the prompt field is configured to represent at least one qualifying dimension of the target generation requirement; and generate the effect description information based on the first prompt and a description generation model.

In an embodiment of the present disclosure, before generating the effect description information based on the first prompt and the description generation model, the processing module 32 is further configured to: obtain target version information corresponding to the effect tool, where the target version information is configured to represent a tool name and/or a tool version of the effect tool; and obtain a corresponding description generation model based on the target version information, where the description generation model is configured to generate target effect description information applicable to the target version information.

In an embodiment of the present disclosure, the effect description information includes a first description field, where the first description field is configured to represent a position arrangement of an effect element in a target effect generated by using the target effect template. The generation module 33 is specifically configured to: process, by using the effect tool, the first description field to obtain a template layout, where the template layout is configured to indicate position coordinates of the effect element in the target effect; and generate the target effect template based on the template layout.

In an embodiment of the present disclosure, when generating the target effect template based on the template layout, the generation module 33 is specifically configured to: obtain an effect asset based on the requirement information; and load the effect asset at the position coordinates of the effect element based on the template layout to generate the target effect template.

In an embodiment of the present disclosure, the effect description information includes a second description field, where the second description field is configured to represent an interaction logic feature in a target effect generated by using the target effect template. The generation module 33 is specifically configured to: process, by using the effect tool, the second description field to obtain a target interaction component corresponding to the interaction logic feature; and generate the target effect template based on the target interaction component.

In an embodiment of the present disclosure, the effect description information includes a third description field, where the third description field is configured to represent an associated display feature between a target effect generated by using the target effect template and a target video, and the target video is an application object of the target effect template. The generation module 33 is specifically configured to: process, by using the effect tool, the third description field to obtain a first effect algorithm for implementing the associated display feature; and generate the target effect template based on the first effect algorithm.

In an embodiment of the present disclosure, the effect description information includes a fourth description field, where the fourth description field is configured to represent mapping logic between an effect element in a target effect generated by using the target effect template and a video image of a target video, and the target video is an application object of the target effect template. The generation module 33 is specifically configured to: process, by using the effect tool, the fourth description field to obtain a second effect algorithm for representing the mapping logic; and generate the target effect template based on the second effect algorithm.

In an embodiment of the present disclosure, the second effect algorithm includes a trigger parameter and a corresponding mapping parameter, where the trigger parameter is configured to represent an image feature of a video image of the target video; and the mapping parameter is configured to set an effect asset for implementing the effect element, and/or to set a display attribute of the effect asset.

In an embodiment of the present disclosure, the effect description information includes a plurality of description fields, and each of the description fields corresponds to one feature dimension of the template feature of the target effect template. The generation module 33 is specifically configured to: send the effect description information to an effect engine corresponding to the effect tool; parse, by using the effect engine, each description field in the effect description information to generate an effect project; and generate the target effect template based on the effect project.

The receiving module 31, the processing module 32, and the generation module 33 are connected in sequence. The effect template generation apparatus 3 provided in this embodiment may perform the technical solution of the above-described method embodiment. The implementation principles and technical effects thereof are similar, which are not repeated in this embodiment.

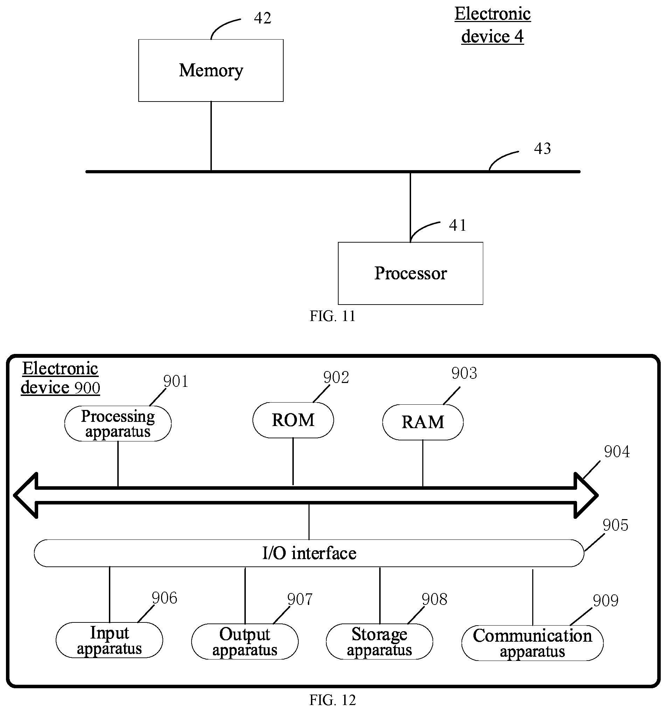

FIG. 11 is a schematic structural diagram of an electronic device according to an embodiment of the present disclosure. As shown in FIG. 11, an electronic device 4 includes: a processor 41 and a memory 42 communicatively connected to the processor 41.

The memory 42 has computer-executable instructions stored thereon.

The processor 41 executes the computer-executable instructions stored in the memory 42 to implement the effect template generation method according to the embodiments as shown in FIG. 2 to FIG. 9.

Optionally, the processor 41 is connected to the memory 42 through a bus 43.

The related illustration may be understood with reference to related descriptions and effects that correspond to the steps in the embodiments corresponding to FIG. 2 to FIG. 9. Details are not repeated herein.

An embodiment of the present disclosure provides a computer-readable storage medium. The computer-readable storage medium stores computer-executable instructions that, when executed by a processor, are configured to implement the effect template generation method according to any one of the embodiments corresponding to FIG. 2 to FIG. 9 of the present disclosure.

In order to implement the above-mentioned embodiments, an embodiment of the present disclosure further provides an electronic device.

FIG. 12 is a schematic structural diagram of an electronic device 900 suitable for implementing the embodiments of the present disclosure. The electronic device 900 may be a terminal device or a server. The terminal device may include, but is not limited to, a mobile terminal such as a mobile phone, a notebook computer, a digital broadcast receiver, a personal digital assistant (PDA), a tablet computer (portable Android device, PAD), a portable media player (PMP), and a vehicle-mounted terminal (such as a vehicle navigation terminal), and a fixed terminal such as a digital TV and a desktop computer. The electronic device shown in FIG. 12 is merely an example, and shall not impose any limitation on the function and scope of use of the embodiments of the present disclosure.

As shown in FIG. 12, the electronic device 900 may include a processing apparatus (for example, a central processing unit or a graphics processing unit) 901 that may perform a variety of appropriate actions and processing based on a program stored in a read-only memory (ROM) 902 or a program loaded from a storage apparatus 908 into a random-access memory (RAM) 903. The RAM 903 further stores various programs and data required for the operation of the electronic device 900. The processing apparatus 901, the ROM 902, and the RAM 903 are connected to one another through a bus 904. An input/output (I/O) interface 905 is also connected to the bus 904.

Generally, the following apparatus may be connected to the I/O interface 905: an input apparatus 906 including, for example, a touchscreen, a touchpad, a keyboard, a mouse, a camera, a microphone, an accelerometer, and a gyroscope; an output apparatus 907 including, for example, a liquid crystal display (LCD), a speaker, and a vibrator; the storage apparatus 908 including, for example, a magnetic tape and a hard disk drive; and a communication apparatus 909. The communication apparatus 909 may allow the electronic device 900 to perform wireless or wired communication with other devices to exchange data. Although FIG. 12 shows the electronic device 900 having various apparatus, it should be understood that it is not required to implement or have all of the shown apparatus. It may be an alternative to implement or have more or fewer apparatus.

In particular, according to the embodiments of the present disclosure, the process described above with reference to the flowchart may be implemented as a computer software program. For example, an embodiment of the present disclosure includes a computer program product, which includes a computer program carried on a computer-readable medium, where the computer program includes program code for performing the method shown in the flowchart. In such an embodiment, the computer program may be downloaded and installed from a network through the communication apparatus 909, installed from the storage apparatus 908, or installed from the ROM 902. When the computer program is executed by the processing apparatus 901, the above-mentioned functions defined in the method of the embodiments of the present disclosure are performed.

It should be noted that the above-mentioned computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. More specific examples of the computer-readable storage medium may include, but are not limited to: an electrical connection having one or more wires, a portable computer magnetic disk, a hard disk drive, a random-access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may further be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), and the like, or any suitable combination thereof.

The above-mentioned computer-readable medium may be included in the above-mentioned electronic device. Alternatively, the computer-readable medium may exist independently, without being assembled into the electronic device.

The above-mentioned computer-readable medium carries one or more programs that, when executed by the electronic device, cause the electronic device to perform the method shown in the above-mentioned embodiment.

The computer program code for performing the operations in the present disclosure may be written in one or more programming languages or a combination thereof, where the programming languages include an object-oriented programming language, such as Java, Smalltalk, or C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user via any kind of network, including a local area network (LAN) or a wide area network (WAN), or may be connected to an external computer (for example, connected via the Internet with the aid of an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. Names of the units do not constitute a limitation on the units themselves in some cases, for example, a first obtaining unit may alternatively be described as "a unit for obtaining at least two internet protocol addresses".

The functions described herein above may be performed at least partially by one or more hardware logic components. For example, without limitation, example types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk drive, a random-access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

In a first aspect, according to one or more embodiments of the present disclosure, an effect template generation method is provided. The method includes:
receiving requirement information input by a user, where the requirement information is configured to describe a target generation requirement for an effect template in a natural language; generating effect description information based on the requirement information, where the effect description information is configured to represent a template feature of a target effect template that meets the target generation requirement; and processing, by using an effect tool, the effect description information to generate the target effect template.

According to one or more embodiments of the present disclosure, generating the effect description information based on the requirement information includes: generating a first prompt based on the requirement information, where the first prompt includes at least one prompt field, and the prompt field is configured to represent at least one qualifying dimension of the target generation requirement; and generating the effect description information based on the first prompt and a description generation model.

According to one or more embodiments of the present disclosure, before generating the effect description information based on the first prompt and the description generation model, the method further includes: obtaining target version information corresponding to the effect tool, where the target version information is configured to represent a tool name and/or a tool version of the effect tool; and obtaining a the description generation model that corresponds to the target version information by using the target version information, where the description generation model is configured to generate target effect description information applicable to the target version information.

According to one or more embodiments of the present disclosure, the effect description information includes a first description field, where the first description field is configured to represent a position arrangement of an effect element in a target effect generated by using the target effect template; and processing, by using the effect tool, the effect description information to generate the target effect template includes: processing, by using the effect tool, the first description field to obtain a template layout, where the template layout is configured to indicate position coordinates of the effect element in the target effect; and generating the target effect template based on the template layout.

According to one or more embodiments of the present disclosure, generating the target effect template based on the template layout includes: obtaining an effect asset based on the requirement information; and loading the effect asset at the position coordinates of the effect element based on the template layout to generate the target effect template.

According to one or more embodiments of the present disclosure, the effect description information includes a second description field, where the second description field is configured to represent an interaction logic feature in a target effect generated by using the target effect template; and processing, by using the effect tool, the effect description information to generate the target effect template includes: processing, by using the effect tool, the second description field to obtain a target interaction component corresponding to the interaction logic feature; and generating the target effect template based on the target interaction component.

According to one or more embodiments of the present disclosure, the effect description information includes a third description field, where the third description field is configured to represent an associated display feature between a target effect generated by using the target effect template and a target video, and the target video is an application object of the target effect template; and processing, by using the effect tool, the effect description information to generate the target effect template includes: processing, by using the effect tool, the third description field to obtain a first effect algorithm for implementing the associated display feature; and generating the target effect template based on the first effect algorithm.

According to one or more embodiments of the present disclosure, the effect description information includes a fourth description field, where the fourth description field is configured to represent mapping logic between an effect element in a target effect generated by using the target effect template and a video image of a target video, and the target video is an application object of the target effect template; and processing, by using the effect tool, the effect description information to generate the target effect template includes: processing, by using the effect tool, the fourth description field to obtain a second effect algorithm for representing the mapping logic; and generating the target effect template based on the second effect algorithm.

According to one or more embodiments of the present disclosure, the second effect algorithm includes a trigger parameter and a mapping parameter corresponding to the trigger parameter, where the trigger parameter is configured to represent an image feature of a video image of the target video; and the mapping parameter is configured to set an effect asset for implementing the effect element, and/or to set a display attribute of the effect asset.

According to one or more embodiments of the present disclosure, the effect description information includes a plurality of description fields, and each of the description fields corresponds to one feature dimension of the template feature of the target effect template; and processing, by using the effect tool, the effect description information to generate the target effect template includes: sending the effect description information to an effect engine corresponding to the effect tool; parsing, by using the effect engine, each description field in the effect description information to generate an effect project; and generating the target effect template based on the effect project.

In a second aspect, according to one or more embodiments of the present disclosure, an effect template generation apparatus is provided. The apparatus includes:
a receiving module configured to receive requirement information input by a user, where the requirement information is configured to describe a target generation requirement for an effect template in a natural language;
a processing module configured to generate effect description information based on the requirement information, where the effect description information is configured to represent a template feature of a target effect template that meets the target generation requirement; and
a generation module configured to process, by using an effect tool, the effect description information to generate the target effect template.

According to one or more embodiments of the present disclosure, the processing module is specifically configured to: generate a first prompt based on the requirement information, where the first prompt includes at least one prompt field, and the prompt field is configured to represent at least one qualifying dimension of the target generation requirement; and generate the effect description information based on the first prompt and a description generation model.

According to one or more embodiments of the present disclosure, before generating the effect description information based on the first prompt and the description generation model, the processing module is further configured to: obtain target version information corresponding to the effect tool, where the target version information is configured to represent a tool name and/or a tool version of the effect tool; and obtain a description generation model that corresponds to the target version information by using the target version information, where the description generation model is configured to generate target effect description information applicable to the target version information.

According to one or more embodiments of the present disclosure, the effect description information includes a first description field, where the first description field is configured to represent a position arrangement of an effect element in a target effect generated by using the target effect template. The generation module is specifically configured to: process, by using the effect tool, the first description field to obtain a template layout, where the template layout is configured to indicate position coordinates of the effect element in the target effect; and generate the target effect template based on the template layout.

According to one or more embodiments of the present disclosure, when generating the target effect template based on the template layout, the generation module is specifically configured to: obtain an effect asset based on the requirement information; and load the effect asset at the position coordinates of the effect element based on the template layout to generate the target effect template.

According to one or more embodiments of the present disclosure, the effect description information includes a second description field, where the second description field is configured to represent an interaction logic feature in a target effect generated by using the target effect template. The generation module is specifically configured to: process, by using the effect tool, the second description field to obtain a target interaction component corresponding to the interaction logic feature; and generate the target effect template based on the target interaction component.

According to one or more embodiments of the present disclosure, the effect description information includes a third description field, where the third description field is configured to represent an associated display feature between a target effect generated by using the target effect template and a target video, and the target video is an application object of the target effect template. The generation module is specifically configured to: process, by using the effect tool, the third description field to obtain a first effect algorithm for implementing the associated display feature; and generate the target effect template based on the first effect algorithm.

According to one or more embodiments of the present disclosure, the effect description information includes a fourth description field, where the fourth description field is configured to represent mapping logic between an effect element in a target effect generated by using the target effect template and a video image of a target video, and the target video is an application object of the target effect template. The generation module is specifically configured to: process, by using the effect tool, the fourth description field to obtain a second effect algorithm for representing the mapping logic; and generate the target effect template based on the second effect algorithm.

According to one or more embodiments of the present disclosure, the second effect algorithm includes a trigger parameter and a mapping parameter corresponding to the trigger parameter, where the trigger parameter is configured to represent an image feature of a video image of the target video; and the mapping parameter is configured to set an effect asset for implementing the effect element, and/or to set a display attribute of the effect asset.

According to one or more embodiments of the present disclosure, the effect description information includes a plurality of description fields, and each of the description fields corresponds to one feature dimension of the template feature of the target effect template. The generation module is specifically configured to: send the effect description information to an effect engine corresponding to the effect tool; parse, by using the effect engine, each description field in the effect description information to generate an effect project; and generate the target effect template based on the effect project.

In a third aspect, according to one or more embodiments of the present disclosure, an electronic device is provided, including: at least one processor and a memory.

The memory has computer-executable instructions stored thereon.

The at least one processor executes the computer-executable instructions stored in the memory, to cause the at least one processor to perform the effect template generation method according to the first aspect and various possible designs of the first aspect.

In a fourth aspect, according to one or more embodiments of the present disclosure, a computer-readable storage medium is provided. The computer-readable storage medium stores computer-executable instructions that, when executed by a processor, cause the effect template generation method according to the first aspect and various possible designs of the first aspect to be implemented.

In a fifth aspect, according to one or more embodiments of the present disclosure, a computer program product including a computer program is provided. When the computer program is executed by a processor, the effect template generation method according to the first aspect and various possible designs of the first aspect is implemented.

The above-mentioned descriptions are merely preferred embodiments of the present disclosure and explanations of the applied technical principles. Those skilled in the art should understand that the scope of disclosure involved in the present disclosure is not limited to the technical solutions formed by specific combinations of the above-mentioned technical features, and shall also cover other technical solutions formed by any combination of the above-mentioned technical features or equivalent features thereof without departing from the above-mentioned disclosed concept. For example, a technical solution formed by a replacement of the above-mentioned features with technical features with similar functions disclosed in the present disclosure (but not limited thereto) also falls within the scope of the present disclosure.

In addition, although the various operations are depicted in a specific order, it should not be construed as requiring these operations to be performed in the specific order shown or in a sequential order. Under certain circumstances, multitasking and parallel processing may be advantageous. Similarly, although several specific implementation details are included in the above-mentioned discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. In contrast, the specific features and actions described above are merely example forms of implementing the claims.

## Claims

1. An effect template generation method, comprising:
receiving requirement information input by a user, wherein the requirement information is configured to describe a target generation requirement for an effect template in a natural language;
generating effect description information based on the requirement information, wherein the effect description information is configured to represent a template feature of a target effect template that meets the target generation requirement; and
processing, by using an effect tool, the effect description information to generate the target effect template.

2. The method according to claim 1, wherein the generating the effect description information based on the requirement information comprises:
generating a first prompt based on the requirement information, wherein the first prompt comprises at least one prompt field, and the at least one prompt field is configured to represent at least one qualifying dimension of the target generation requirement; and
generating the effect description information based on the first prompt and a description generation model.

3. The method according to claim 2, before the generating the effect description information based on the first prompt and a description generation model, the method further comprises:
obtaining target version information corresponding to the effect tool, wherein the target version information is configured to represent a tool name and/or a tool version of the effect tool; and
obtaining the description generation model that corresponds to the target version information by using the target version information, wherein the description generation model is configured to generate target effect description information applicable to the target version information.

4. The method according to claim 1, wherein the effect description information comprises a first description field, wherein the first description field is configured to represent a position arrangement of an effect element in a target effect generated by using the target effect template; and
the processing, by using the effect tool, the effect description information to generate the target effect template comprises:
processing, by using the effect tool, the first description field to obtain a template layout, wherein the template layout is configured to indicate position coordinates of the effect element in the target effect; and
generating the target effect template based on the template layout.

5. The method according to claim 4, wherein the generating the target effect template based on the template layout comprises:
obtaining an effect asset based on the requirement information; and
loading the effect asset at the position coordinates of the effect element based on the template layout to generate the target effect template.

6. The method according to claim 1, wherein the effect description information comprises a second description field, wherein the second description field is configured to represent an interaction logic feature in a target effect generated by using the target effect template; and
the processing, by using the effect tool, the effect description information to generate the target effect template comprises:
processing, by using the effect tool, the second description field to obtain a target interaction component corresponding to the interaction logic feature; and
generating the target effect template based on the target interaction component.

7. The method according to claim 1, wherein the effect description information comprises a third description field, wherein the third description field is configured to represent an associated display feature between a target effect generated by using the target effect template and a target video, and the target video is an application object of the target effect template; and
the processing, by using the effect tool, the effect description information to generate the target effect template comprises:
processing, by using the effect tool, the third description field to obtain a first effect algorithm for implementing the associated display feature; and
generating the target effect template based on the first effect algorithm.

8. The method according to claim 1, wherein the effect description information comprises a fourth description field, wherein the fourth description field is configured to represent mapping logic between an effect element in a target effect generated by using the target effect template and a video image of a target video, and the target video is an application object of the target effect template; and
the processing, by using the effect tool, the effect description information to generate the target effect template comprises:
processing, by using the effect tool, the fourth description field to obtain a second effect algorithm for representing the mapping logic; and
generating the target effect template based on the second effect algorithm.

9. The method according to claim 8, wherein the second effect algorithm comprises a trigger parameter and a mapping parameter corresponding to the trigger parameter, wherein the trigger parameter is configured to represent an image feature of a video image of the target video; and the mapping parameter is configured to set an effect asset for implementing the effect element, and/or to set a display attribute of the effect asset.

10. The method according to claim 1, wherein the effect description information comprises a plurality of description fields, and each of the plurality of description fields corresponds to one feature dimension of the template feature of the target effect template; and processing, by using the effect tool, the effect description information to generate the target effect template comprises:
sending the effect description information to an effect engine corresponding to the effect tool;
parsing, by using the effect engine, each of the plurality of description fields in the effect description information to generate an effect project; and
generating the target effect template based on the effect project.

11. An effect template generation apparatus, comprising:
a receiving module, configured to receive requirement information input by a user, wherein the requirement information is configured to describe a target generation requirement for an effect template in a natural language;
a processing module, configured to generate effect description information based on the requirement information, wherein the effect description information is configured to represent a template feature of a target effect template that meets the target generation requirement; and
a generation module, configured to process, by using an effect tool, the effect description information to generate the target effect template.

12. An electronic device, comprising a processor and a memory,
wherein
the memory has computer-executable instructions stored thereon; and
the processor executes the computer-executable instructions stored in the memory, to cause the processor to perform the effect template generation method according to any one of claims 1 to 10.

13. A computer-readable storage medium storing computer-executable instructions, when executed by a processor, cause the effect template generation method according to any one of claims 1 to 10 to be implemented.
